Europäisches Patentamt

European Patent Office

Office européen des brevets

(11) Numéro de publication: **0 207 863**
**A2**

(12) # DEMANDE DE BREVET EUROPEEN

(21) Numéro de dépôt: 86401449.3

(22) Date de dépôt: 30.06.86

(51) Int. Cl.4: **G01N 23/207**

(30) Priorité: 01.07.85 FR 8510379

(43) Date de publication de la demande:
07.01.87 Bulletin 87/02

(84) Etats contractants désignés:
DE GB NL

(71) Demandeur: **CENTRE NATIONAL DE LA RECHERCHE SCIENTIFIQUE (CNRS)**
**15, Quai Anatole France**
**F-75007 Paris(FR)**

(72) Inventeur: **Galy, Jean**
**9, Rue des Pénitents Blancs**
**F-31000 Toulouse(FR)**
Inventeur: **Jaud, Joel**
**27, Lotissement La Guérinière**
**F-31320 Vigoulet-Auzil(FR)**

(74) Mandataire: **Morelle, Guy Georges Alain**
**SC Morelle & Bardou 1, Avenue de Ranguell**
**F-31400 Toulouse(FR)**

(54) **Procédé pour l'étude de la structure cristalline de monocristaux et dispositif pour la mise en oeuvre de ce procédé.**

(57) L'invention concerne un procédé pour l'étude de la structure cristalline de monocristaux consistant à irradier un monocristal par un faisceau de rayons X et un diffractomètre pour la mise en oeuvre de ce procédé.

Ce procédé consiste à étudier les taches des faisceax diffractés par ledit monocristal à travers une fenêtre d'analyse longitudinale et à faire balayer l'espace présumé devant contenir lesdites taches par ladite fenêtre d'analyse longitudinale. Le diffractomètre permettant de mettre en oeuvre ce procédé se caractérise essentiellement par le fait qu'il comprend une embase 1, une platine goniométrique 4 sur l'embase 1, un support 11 d'un cristal 13 à étudier, une source de rayonnement X 45, un détecteur à localisation 21, au moins un montant 30, 31, fixé sur l'embase 1, un bras 36 monté rotatif sur ledit montant, la source de rayonnement X étant fixée sur le bras 36, de façon à pivoter autour du cristal.

Applications à la détermination de la structure cristalline d'un monocristal tel que protéine.

fig.2

# PROCEDE POUR L'ETUDE DE LA STRUCTURE CRISTALLINE DE MONOCRISTAUX ET DISPOSITIF POUR LA MISE EN OEUVRE DE CE PROCEDE

La présente invention concerne les procédés pour l'étude de la structure cristalline de monocristaux et le dispositif pour la mise en oeuvre de ces procédés.

La détermination des structures cristallines de monocristaux se fait habituellement par l'étude de la diffraction d'un rayonnement X par les monocristaux et nécessite l'utilisation de diffrectomètres automatiques. Deux grands type d'appareils existent sur le marché à l'heure actuelle : à berceau d'Euler, le plus classique, et à bras Kappa, le plus en vogue aujourd'hui.

Ces diffractomètres reposent sur le principe d'une mesure par détecteur ponctuel classique. Ils enregistrent les faisceaux diffractés d'un rayonnement X par les plans cristallins du monocristal à l'aide d'un compteur à scintillation. Les faisceaux diffractés sont enregistrés les uns après les autres, après que l'on ait positionné dans l'espace le cristal et le détecteur (compteur à scintillation) selon des angles préalablement déterminés. Ces mesures sont malgré tout délicates à mettre en oeuvre, car elles nécessitent une connaissance préliminaire de l'orientation de la maille cristalline des monocristaux à étudier avec une relativement bonne précision afin d'obtenir préalablement une estimation des possibilités de faisceaux diffractés. Dans ces conditions, en présumant de la position de ces faisceaux diffractés, il est alors possible de les trouver assez facilement. Ceci peut, a priori, être un procédé assez satisfaisant. Mais il présente, en fait, deux inconvénients majeurs. D'une part, la durée des mesures est importante, du fait de leur nombre et de la recherche de la position précise des faisceaux diffractés. D'autre part, cette technique ne permet pas de trouver de façon rapide et sûre les faisceaux secondaires dénommés couramment "traînées de diffusion entre les pics de Bragg".

La présente invention a pour but de mettre en oeuvre un procédé pour l'étude de la nature cristalline de monocristaux qui tente de raccourcir les temps de mesure par rapport à ceux nécessités jusqu'à ce jour et qui, de plus, permet d'obtenir des mesures plus complètes.

En conséquence, les appareils qui permettent de mettre en oeuvre les procédés antérieurs connus ne sont plus adaptés, car ils nécessitent un positionnement préalable du cristal et du détecteur pour chaque mesure, ce qui implique nécessairement un temps particulièrement long pour un enregistrement satisfaisant, le nombre de mesures étant souvent trés important. Ceci constitue un inconvénient majeur dans le cas de l'étude de cristaux fragiles, instables chimiquement ou sensibles au rayonnement X et ainsi susceptibles de se décomposer, tel étant le cas de certaines protéines.

Les inventeurs avaient déjà réalisé un dispositif permettant de pallier, du moins partiellement, les inconvénients de ceux de l'Art antérieur.

Ce dispositif ou diffractomètre est essentiellement constitué par une tête goniométrique portant le cristal à analyser, des détecteurs à fil portés par une couronne coaxiale avec l'axe de rotation du cristal et dont les fils respectifs sont dans le plan perpendiculaire à cet axe de rotation, ledit plan contenant le cristal, et au moins un moteur pour entraîner en rotation l'ensemble constitué par le support du cristal et le support du détecteur, cette rotation s'effectuant autour d'un axe passant par le centre du cristal et perpendiculaire au plan formé par l'axe de rotation du cristal et un faisceau de rayons X fourni par une source. Ce diffractomètre a donné de bons résultats. Cependant, les inventeurs se sont aussi attachés à réaliser un diffractomètre particulièrement adapté à la mise en oeuvre du procédé selon la présente invention.

C'est pourquoi, la présente invention a aussi pour but un perfectionnement au diffractomètre décrit ci-dessus, ayant essentiellement une structure plus simple et plus adaptée à une commande automatique, et aussi, notamment, permettant d'effectuer plus facilement des mesures dans des conditions particulières, par exemple à très basses températures.

Plus précisément, la présente invention a pour objet un procédé pour l'étude de la structure cristalline de monocristaux consistant à irradier un monocristal, dont la structure cristalline doit être déterminée, par un faisceau de rayons X, à étudier les taches des faisceaux diffractés par ledit monocristal, caractérisé par le fait qu'il consiste à étudier les taches de diffraction à travers une fenêtre d'analyse longitudinale, et à faire balayer l'espace présumé devant contenir lesdites taches de faisceaux diffractés par ladite fenêtre d'analyse longitudinale.

La présente invention a aussi pour objet un diffractomètre pour la mise en oeuvre du procédé ci-dessus, comportant une embase, une platine à trois axes de rotation, ladite platine étant portée par ladite embase, un support coopérant avec ladite platine, ledit support comportant des moyens pour fixer un cristal à étudier au-dessus de ladite platine, au moins une source de rayonnement du type X sensiblement ponctuelle, caractérisé par le fait qu'il comprend :

-au moins un montant fixé à ladite embase, la direction dudit montant étant située dans un premier plan contenant au moins un premier axe de rotation de ladite platine,

-un bras, des moyens pour monter rotatif ledit bras sur ledit montant autour d'un deuxième axe passant sensiblement au point de fixation du cristal, la source de rayonnement étant située sur ledit bras, dans un second plan sensiblement perpendiculaire au premier et passant par le point de fixation dudit cristal,

-un détecteur courbe à localisation et des moyens pour associer ledit détecteur à ladite embase.

D'autres caractéristiques et avantages de la présente invention apparaîtront au cours de la description suivante donnée en regard des dessins annexés à titre illustratif mais nullement limitatif, dans lesquels :

-la Figure 1 représente un schéma permettant d'expliciter et de comprendre le procédé selon l'invention,

-la Figure 2 représente, vu en perspective partiellement écorchée, un mode de réalisation d'un diffractomètre selon l'invention, et

-la Figure 3 représente un détail de réalisation possible d'un mode de réalisation perfectionné selon la Figure 2.

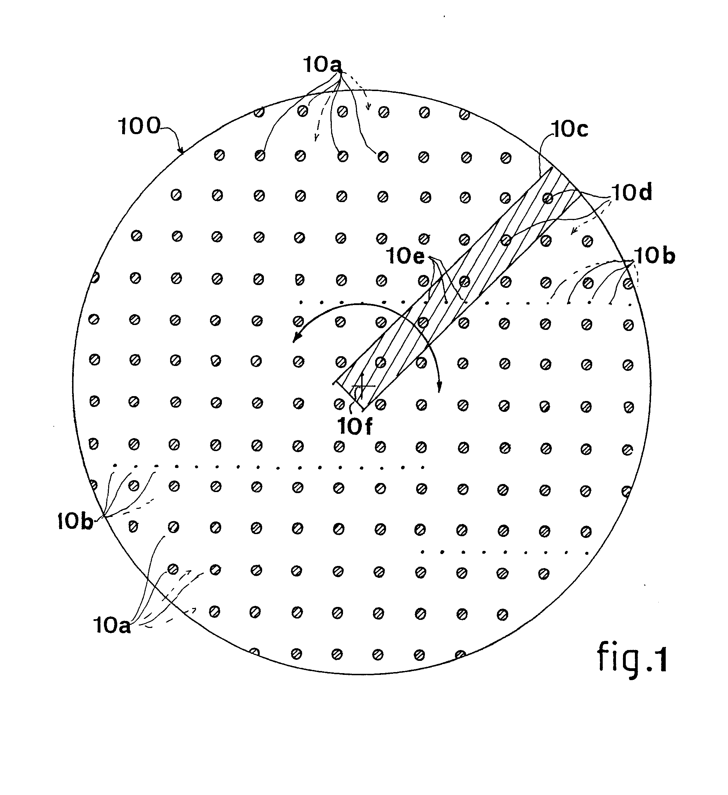

La Figure 1 représente, de façon schématique, l'ensemble des faisceaux d'un rayonnement X diffractés par un monocristal. Sur la Figure, ont été représentés les taches 10a des faisceaux qui se produiraient dans un plan, essentiellement le plan d'analyse de ces faisceaux. Il a été, aussi, représenté de façon schématique, et dans un souci de simple illustration, les traînées 10b de diffusion qui sont obtenues entre les taches 10a dues aux pics de Bragg, comme le connaissent bien les hommes de l'Art en la matière. Ils savent aussi qui, de la détermination de l'ensemble des taches 10a des faisceaux diffractés et des taches 10b des traînées de diffusion, il est possible de déduire, de façon très précise, la structure cristalline des monocristaux, comme par exemple de certaines protéines.

Pour obtenir ces informations, et surtout ne pas en manquer, le procédé consiste à irradier le monocristal dont la structure cristalline doit être déterminée par un faisceau de rayonnement X, puis à étudier les taches des faisceaux diffractés par le monocristal, cette étude se faisant à travers une fenêtre d'analyse longitudinale 10c prenant en compte toute une portion de l'espace 100 dans lequel se trouvent les taches, ce qui permet donc de localiser et étudier toutes les taches de diffraction 10d situées dans cette portion, mais aussi toutes les taches des traînées de diffusion 10e qui s'y trouvent. On fait ainsi balayer tout l'espace 100 par la fenêtre d'analyse 10c, d'une façon continue ou discontinue, et on analyse, à chaque fois, l'ensemble des taches 10a et 10b.

Dans un mode de réalisation avantageux du point de vue technique, le procédé consiste à balayer l'espace 100 par un déplacement en rotation de la fenêtre 10c autour d'un point 10f sensiblement central de l'espace 100. Enfin, il est bien précisé que ce balayage est relatif, c'est-à-dire que l'on comprend, dans le sens de l'invention, aussi bien un balayage de la fenêtre d'analyse par rapport à l'ensemble des faisceaux diffractés que l'inverse.

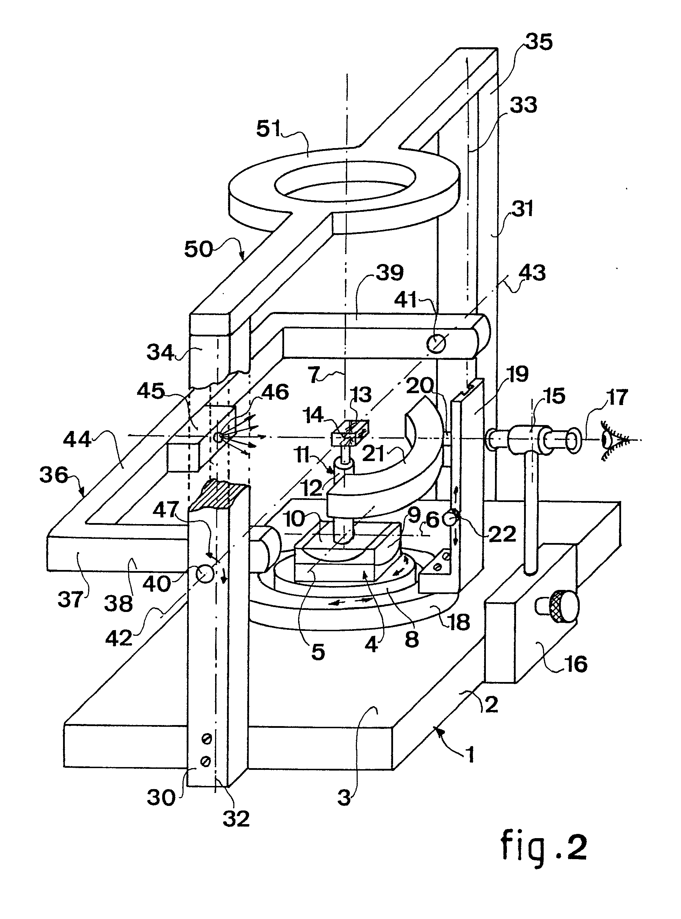

L'exemple de ce dispositif permettant d'obtenir cette deuxième solution est illustré sur la Figure 2.

La Figure 2 représente donc un mode de réalisation d'un diffractomètre spécialement adapté à l'étude de la structure de monocristaux selon le procédé décrit ci-dessus.

Ce diffractomètre comprend une embase 1 constituée par un socle 2 avantageusement pesant et creux pour pouvoir y loger des moteurs d'entraînement, si nécessaire. Sur ce socle 2 et sur sa face supérieure 3, sensiblement en son centre, est disposée une platine 4. Cette platine permet d'obtenir trois mouvements de rotation autour respectivement des axes 5, 6 et 7, les axes 5 et 6 étant parallèles au plan de la face 3, tandis que l'axe 7 est perpendiculaire à cette face 3. Cette platine est de type goniométrique et comporte essentiellement trois pièces 8, 9 et 10 s'articulant les unes par rapport aux autres. La pièce 8 pivote autour de l'axe 7, la pièce 9 autour de l'axe 6, et la pièce 10 autour de l'axe 5. Sur cette dernière pièce 10 est fixé un support longitudinal 11, comme par exemple un tige télescopique 12, au sommet duquel sont agencés des moyens pour fixer un monocristal 13.

Ainsi, en agissant sur les trois pièces 8, 9 et 10 et la tige télescopique 12 mentionnées ci-dessus, il est possible de positionner le cristal 13 en un point prédéterminé 14, en lui donnant, en plus, une orientation voulue par rapport à ces axes de définition cristallographique. Cette position peut être vérifiée par une lunette de visée 15 qui est montée sur des moyens de positionnement 16 que permettent de faire passer son axe optique 17 par le point déterminé 14 défini précédemment.

Autour de la platine 4 définie ci-avant, le socle 2 supporte un plateau tournant 18 en forme de couronne, ce plateau tournant 18 étant positionné de façon à pivoter autour de l'axe 7. Ce plateau tournant 18 porte une crémaillère 19 dont la pièce mobile en translation 20 porte un détecteur courbe à localisation 21 de type connu dont le cercle de focalisation est sensiblement centré sur la position 14 à laquelle se trouve le cristal 13. Le déplacement de ce détecteur peut être obtenu soit en faisant pivoter le plateau tournant 18 autour de l'axe 7, soit en agissant sur le bouton de commande 22 du déplacement de la pièce mobile 20 de la crémaillère 19. De cette façon, par la combinaison des deux mouvements, le détecteur peut être parfaitement positionné par rapport au cristal et au rayonnement diffracté auquel le cristal donnera naissance.

De part et d'autre du socle 2 sont situés avantageusement deux montants sensiblement linéaires 30 et 31 dont les directions respectives 32 et 33 sont choisies pour qu'elles soient parallèles à l'axe 7 et symétriques par rapport à ce même axe. La longueur de ces montants au-dessus de la face 3 du socle 2 est choisie pour que leur extrémité supérieure respective 34 et 35 soit située dans un plan nettement au-dessus de la position 14 que doit occuper le cristal à analyser.

Ces deux montants, comme illustré sur la Figure 2, portent un bras 36 en forme d'étrier 37 dont les côtés latéraux 38 et 39 sont montés rotatifs sur respectivement deux arbres 40 et 41 dont les axes de rotation 42 et 43 sont colinéaires et passent par le point 14 défini précédemment. La direction de ces axes est choisie pour qu'elle soit perpendiculaire à l'axe 7.

La base 44 de l'étrier 37 porte une source de rayonnement ponctuelle 45 apte à émettre un rayonnement du type X, par exemple par une fenêtre de sortie 46. Cette source 45 est fixée sur l'étrier 37 de façon que la fenêtre de sortie 46 se trouve dans un plan perpendiculaire au plan défini par les directions 32, 33 et l'axe 7, et que ce plan contienne l'axe de rotation 7. De cette façon, quand l'étrier est animé d'un mouvement de rotation représenté par la flèche 47, la fenêtre 46 décrit un cercle dont le centre est situé sur le point 14 sur lequel sera positionné le cristal 13 à analyser.

Dans la configuration décrite ci-dessus, et plus particulièrement celle des deux montants 30 et 31, le diffractomètre peut comporter une entretoise 50 reliant les deux extrémités 34 et 35 des deux montants, cette entretoise pouvant comporter des moyens pour maintenir un cryostat du type à hélium, par exemple, pour venir refroidir le cristal 13. Ces moyens sont constitués, par exemple, par une couronne 51 positionnée au-dessus du cristal 13 et plus particulièrement centrée sur l'axe 7.

Le diffractomètre tel que décrit permet donc de mettre en oeuvre le procédé exposé ci-dessus et s'utilise dans son principe général, de la même façon que ceux déjà conçus par les Inventeurs. Mais, en plus de pouvoir détecter toutes les taches de diffraction et celles des traînées de diffusion, il présente, à l'évidence, une structure plus légère que ceux connus jusqu'à présent, du fait notamment que toutes les pièces en mouvement ne présentent pas de masse importante, comme l'étrier par exemple. Ainsi, les mouvements de rotation des différentes pièces pourront-ils être obtenus très facilement par des moteurs, notamment de type pas-à-pas de faible puissance. De ce fait, ce diffractomètre pourra être automatisé sans difficultés et permettra des mesures de grande précision grâce à la facilité de la commande des rotations des différents éléments. Bien évidemment, l'ensemble de ces commandes pourra être facilement piloté par un ordinateur qui sera capable de délivrer sur un afficheur de quelque nature que ce soit le résultat des analyses du cristal.

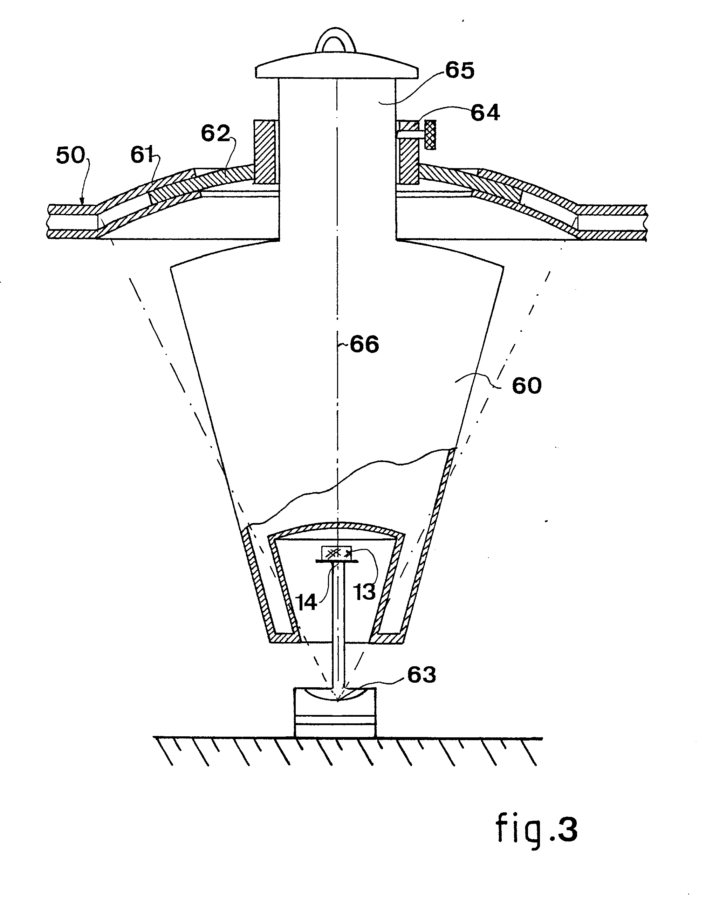

Comme mentionné ci-avant, il est très important de pouvoir effectuer des mesures à très basses températures. C'est pourquoi le diffractomètre comporte des moyens pour supporter un cryostat. Cependant, il est bien connu que ces cryostats sont assez lourds et difficiles à manipuler. La Figure 3 représente un mode de réalisation des moyens pouvant maintenir un cryostat 60 au-dessus et autour d'un cristal 13.

Ces moyens sont constitués de deux parties mécaniques 61 et 62 formant respectivement deux portions de calottes sphériques s'emboîtant l'une dans l'autre pour former une rotule ayant son centre de rotation au-dessous du point 14 de fixation du cristal 13, et même, avantageusement, sensiblement au point de rotation de la platine goniométrique 4. De plus, la partie centrale 62 comporte une couronne de fixation 64, par exemple du col supérieur 65 du cryostat 60. Cette couronne de fixation 64 permet de maintenir le cryostat au-dessus et autour du cristal, et dans une position adaptée pour ne pas gêner les mesures. En effet, ceci est parfaitement facilité par le fait que le cryostat peut pivoter sur lui-même autour de l'axe 66 ou se translater suivant cet axe, du fait de l'existence de le couronne de fixation 64 et de la partie sphérique 62 qui peut glisser par rotation sphérique dans la partie fixe 61 solidaire de l'entretoise 50.

Il est ainsi possible de positionner sans difficulté le cryostat 60 par rapport au cristal 13 sur son support 11, et d'effectuer sans gêne les mesures à basses températures.

**Revendications**

1. Procédé pour l'étude de la structure cristalline de monocristaux consistant à irradier un monocristal, dont la structure cristalline doit être déterminée, par un faisceau de rayons X, à étudier les taches des faisceaux diffractés par ledit monocristal, CARACTERISE PAR LE FAIT QU'il consiste à étudier les taches de diffraction à travers une fenêtre d'analyse longitudinale et à faire balayer l'espace présumé devant contenir lesdites taches de faisceaux diffractés par ladite fenêtre d'analyse longitudinal.

2. Procédé selon la revendication 1, CARACTERISE PAR LE FAIT QU'il consiste à effectuer un balayage tournant par rapport à un point sensiblement central dudit espace.

3. Diffractomètre pour la mise en oeuvre du procédé selon l'une des revendications 1 ou 2 comportant une embase (1), une platine (4) à trois axes de rotation (5, 6, 7), ladite platine étant portée par ladite embase, un support (11) coopérant avec ladite platine (4), ledit support comportant des moyens pour fixer un monocristal (13) à étudier au-dessus de ladite platine, au moins une source de rayonnement de type X (45) sensiblement ponctuelle, CARACTERISE PAR LE FAIT QU'il comprend :

-au moins un montant (30, 31) fixé à ladite embase (1), la direction (32, 33) dudit montant étant située dans un premier plan contenant au moins un premier axe (7) de rotation de ladite platine (4),

-un bras (36), des moyens (40, 41) pour monter rotatif ledit bras sur ledit montant (30, 31) autour d'un deuxième axe (42, 43) passant sensiblement au point (14) de fixation du monocristal, la source de rayonnement (45) étant située sur ledit bras, dans un second plan sensiblement perpendiculaire au premier et passant par le point de fixation dudit cristal,

-un détecteur courbe à localisation (21), et

-des moyens pour associer, (19, 20, 22), ledit détecteur à ladite embase.

4. Diffractomètre selon la revendication 3, CHARACTERISE PAR LE FAIT QU'il comporte une lunette de visée (15) et des moyens (16) de positionnement réglable de ladite lunette par rapport à ladite embase (1).

5. Diffractomètre selon l'une des revendications 3 ou 4, CARACTERISE PAR LE FAIT QU'il comporte un deuxième montant (30, 31) dont la direction (32, 33) est située dans ledit premier plan, les directions (32, 33) des deux montants étant sensiblement symétriques par rapport audit premier axe de rotation (7).

6. Diffractomètre selon la revendication 5, CARACTERISE PAR LE FAIT QUE ledit bras (36) est conformé en étrier (37) dont les deux bras latéraux (38, 39) sont respectivement montés rotatifs autour de deux arbres (40, 41) de rotation sur respectivement les deux dits montants (30, 31), les axes (42, 43) de rotation de ces deux arbres étant colinéaires et passant sensiblement par le point de fixation (14) du monocristal (13).

7. Diffractomètre selon l'une des revendications 5 ou 6, CARACTERISE PAR LE FAIT QUE lesdits montants (30, 31) ont une longueur déterminée de telle façon que leur extrémité supérieure respective (34, 35) soit dans un troisième plan situé nettement au-dessus du point de fixation (14) du monocristal - (13).

8. Diffractomètre selon la revendication 7, CARACTERISE PAR LE FAIT QUE les deux dites extrémités (34, 35) des deux montants (30 et 31) sont reliées par des moyens de liaison (50).

9. Diffractomètre selon la revendication 8, CARACTERISE PAR LE FAIT QU'il comporte des moyens de support (51) en association avec lesdits moyens de liaison.

10. Diffractomètre selon la revendication 9, CARACTERISE PAR LE FAIT QUE lesdits moyens de support (51) comportent des moyens de rotules (61, 62, 64) dont le point de rotation est situé sensiblement au-delà dudit point de fixation (14) dudit monocristal, et des moyens (64) pour fixer un élément (60) tel qu'un cryostat.

11. Diffractomètre selon l'une des revendications précédentes 3 à 10, CARACTERISE PAR LE FAIT QUE lesdits mouvements de rotation sont commandés par des moteurs, lesdits moteurs étant pilotés par un ordinateur.

fig.1

fig.2

fig.3